Europäisches Patentamt

European Patent Office

Office européen des brevets

(11) Veröffentlichungsnummer: **0 290 646**

**A1**

(12) **EUROPÄISCHE PATENTANMELDUNG**

(21) Anmeldenummer: **87106895.3**

(22) Anmeldetag: **12.05.87**

(51) Int. Cl.4: **G01L 11/00**

(43) Veröffentlichungstag der Anmeldung:
**17.11.88 Patentblatt 88/46**

(84) Benannte Vertragsstaaten:
**AT BE CH DE ES FR GB GR IT LI LU NL SE**

(71) Anmelder: **FIBRONIX Faseroptische Sensoren
+ Systeme GmbH
Werftstrasse 208
D-2300 Kiel(DE)**

(72) Erfinder: **Giese, Erhard, Dr.
Drachenbahn 15
D-2300 Kiel 17(DE)**

(74) Vertreter: **Richter, Werdermann & Gerbaulet
Neuer Wall 10
D-2000 Hamburg 36(DE)**

(54) **Faseroptischer Druckaufnehmer.**

(57) Faseroptischer Druckaufnehmer, bei dem über einen Lichtleiter (11) einem auf einer Membran (1) angebrachten spiegelnden Fläche (14) zugeführtes Licht reflektiert und über einen Lichtleiter (15) einem Lichtempfänger (16) zugeführt wird, der ein von einer Verschiebung der Membran abhängiges Signal liefert. Nach der Erfindung wird in der Nähe der Membran (1) wenigstens ein Korrektursignal-Element angeordnet, mit Hilfe dessen das erhaltene Meßsignal in einer Auswerteeinrichtung (31; 35) korrigiert wird. Vorzugsweise wird eine zweite Lichtleiteranordnung (24,26) angebracht, die mit einem in der Nähe des Randes der Membran angeordneten zweiten spiegelnden Fläch (25) zussammenarbeitet und die das Korrektursignal liefert

FIG.1

EP 0 290 646 A1

## Faseroptischer Druckaufnehmer

Die Erfindung bezieht sich auf einen faseroptischen Druckaufnehmer, bei dem das Licht von einer (ersten) Lichtquelle über einen (ersten) Lichtleiter zu einem Aufnehmerkopf geführt wird, in dem das Licht an einer ersten Licht-Austrittsstelle aus dem Lichtleiter austritt und von einem etwa in der Mitte einer Membran angebrachten (ersten) spiegelnden Fläche reflektiert wird, wobei ein Teil des reflektierten Lichtes in einen, gegebenenfalls den gleichen, Lichtleiter wieder eingekoppelt und seine Intensität an der Austrittsstelle aus diesem Lichtleiter in einem Lichtempfänger bestimmt wird und aus dem so erhaltenen elektrischen Intensitätssignal in einer Auswerteeinrichtung eine etwaige Verschiebung der spiegelnden Fläche gegenüber der ersten Licht-Austrittsstelle und/oder der Licht-Einkoppelstelle der Druckmeßwert bestimmt wird.

Bei einem solchen Druckaufnehmer ist eine Membran einem Medium, dessen Druck gemessen werden soll, ausgesetzt. Die Membran, die vorzugsweise kreisrund ausgebildet ist, ist an ihrem Rand in einem Haltering gehaltert. Durch die Membran und den Haltering wird eine Kammer gebildet, die mit einem Verschlußstück, sozusagen mit einem Deckel verschlossen ist. Das Verschlußstück kann in beliebiger Weise an einer Armatur gehaltert sein, z.B. mittels eines flanschartigen Ringes. Der Haltering ist an dem Verschlußstück befestigt, z.B. mittels eines Gewindes od.dgl.

Von einer Lichtquelle, z.B. einer Leuchtdiode, wird Lichtenergie einem Lichtleiter zugeführt, der eine weitgehend beliebige Länge haben kann.

Das von der Lichtquelle eingestrahlte Licht wird in dem Lichtleiter von z.B. 100 bis 300 Mikrometer Faserdurchmesser weitergeführt und tritt am anderen Ende aus. Über einen kurzen Abstand von z.B. 100 µm trifft das Licht dann auf eine spiegelnde Oberfläche und wird dort reflektiert. Das reflektierte Licht wird zu einem Teil von einem zweiten Lichtleiter aufgenommen und an seinem anderen Ende einem weiteren Lichtempfänger, z.B. mit einer Fotodiode, aufgenommen. Dort wird die zugeführte Lichtitensität umgewandelt in eine elektrische Steuergröße, die dem Eingangs eines Verstärkers zugeführt wird. An einer mit dem Ausgang des Verstärkers verbundenen Ausgangsklemme tritt dann eine elektrische Steuergröße, z.B. eine Spannung oder ein Strom auf, deren Größe in Abhängigkeit vom Abstand x zwischen der Austrittsfläche des Lichtleiters und der spiegelnden Oberfläche beeinflußt wird.

Ein derartiger faseroptischer Druckaufnehmer ist z.B. bei der Druckmessung eines heißen Mediums gut verwendbar, weil die Bauteile des Druckaufnehmerkopfes 2,3,6 resistent gegen sehr hohe Temperaturen ausgebildet werden können. Ein solcher Druckaufnehmer ist unempfindlich gegen starke elektrische Störfelder, so daß auch Messungen in exlosionsgefährdeten Bereichen vorgenommen werden können. Elektrische Einwirkungen auf das Meßobjekt treten nicht auf, so daß eine Anwendung auch im Bereich der Medizin ohne Gefährdung möglich ist. Auch andere gegebenenfalls starke elektromagnetische oder nukleare Strahlungen wirken sich nicht aus, da die Lichtübertragung dadurch prinzipiell nicht gestört wird. Ein derartiger Druckaufnehmer zeigt jedoch eine störende Temperaturabhängigkeit. Bei einer Temperaturzunahme dehnt sich der Haltering aus, die Membran wird von der unteren Fläche des Verschlußstückes weggeschoben, und entsprechend ändert sich allein durch diesen Temperatureinfluß der Abstand x zwischen den Endflächen der beiden Lichtleiter einerseits und der spiegelnden Oberfläche andererseits. Da dieser Abstand ohnehin nur etwa 0,1 mm beträgt, ergibt sich ein beträchtlicher Fehler. Eine Erhitzung der Membran führt auch zu einer Änderung des Elastizitätskoeffizienten des Materials. Die vom Druck auf die Membran abhängige Durchbiegung ist daher auch temperaturempfindlich.

Die Erfindung löst die Aufgabe, die Meßgenauigkeit eines Druckaufnehmers der eingangs erwähnten Art wesentlich zu verbessern, insbesondere die Temperaturabhängigkeit zu beseitigen oder wenigstens stark zu vermindern.

Zur Lösung dieser Aufgabe wird ein faseroptischer Druckaufnehmer der eingangs beschriebenen Art vorgeschlagen, der erfindungsgemäß in der Weise ausgebildet ist, daß an der oder wenigstens in der Nähe der Membran wenigstens ein Korrektursignal-Element angeordnet ist, von dem ein Korrektursignal der Auswerteeinrichtung zugeführt wird.

Als Korrektursignal-Element kann ein üblicher Temperaturfühler angeordnet sein, z.B. im Randbereich der Membrane selbst oder auf einer unmittelbar benachbarten Halterung. Bei einem elektrischen Temperaturfühler kann das so erhaltene Signal direkt in einen Schaltungsteil am Signalausgang eingespeist werden.

Eine bevorzugte Ausführungsform der Erfindung besteht darin, daß Licht, das gegebenenfalls der gleichen Lichtquelle entnommen ist, über wenigstens einen Hilfslichtleiter einer zweiten, in der Nähe des Randes der Membran angeordneten zweiten spiegelnden Fläche zugeführt und das von ihr reflektierte Licht in einen, gegebenenfalls den gleichen, Hilfs-Lichtleiter eingekoppelt und seine Intensität an der Austrittsstelle aus diesem Lichtleiter bestimmt wird und aus dem erhaltenen Intensitätssignal ein etwaiges, vom Meßdruck wenigstens nahezu unabhängiges Korrektursignal gewonnen und der Auswerteeinrichtung zugeführt wird.

Wenn das Licht aus dem Hilfs-Lichtleiter austritt und an einer auf der Membran am Rande angebrachten spiegelnden Fläche reflektiert wird, wird die Reflexion bei einer Bewegung der Mittelzone der Membran durch Druckänderungen nicht mitverändert. Lediglich die Verschiebungen der Membranebene, die durch Temperatur-Ausdehnungen von Halterungselementen bewirkt sind, beeinflussen die zurückkehrende Lichtintensität vom Hilfsleiter. Es wird somit, mit den gleichen vorteilhaften Eigenschaften einer faseroptischen Abtastung, ein temperaturabhängiges Korrektursignal erhalten, das zur Korrektur des Druck-Meßsignals benutzt, z.B. additiv zugesetzt werden kann. Nach einer besonderen Ausführungsform ist der Auswerteeinrichtung für das Meßsignal eine Ausgleichseinrichtung, z.B. mit einem Tabellen-Speicher, zugeordnet, mit dessen Hilfe die durch die Kennlinie des Druckaufnehmers bedingten Abweichungen von einem gewünschten, z.B. linearen, Verlauf beeinflußt werden, wobei das Korrektursignal der Ausgleichseinrichtung zugeführt werden kann. Die Ausgleichseinrichtung kann einen Teil der Auswerteeinrichtung bilden oder mit ihr separat zusammengeschaltet sein. Dadurch können auch Abweichungen von der Linearität zwischen Druckwert und erhältenem Meßsignal ausgeglichen werden, die einerseits durch die optischen Verhältnisse zwischen Lichtleiter-Austritt und spiegelnder Fläche und andererseits durch nichtlineare elastische Verformungen der Membran erhalten werden.

Wenn Lichtleiter unterschiedlich geformt und in Betrieb unterschiedlich abgebogen werden, ändert sich in unterschiedlichem Maße die Dämpfung für das hindurchgeleitete Licht. Nach einer vorteilhaften Weiterbildung der Erfindung werden daher die Lichtleiter zu einem großen Teil ihrer Länge eng benachbart geführt, z.B. in einer schlauchartigen Hülle. Dann ist eine etwaige Dämpfungsänderung durch Biegungen praktisch gleich, so daß Verfälschungen des Meßergebnisses vermieden oder wenigstens stark vermindert werden können.

Bei dem zweiten Lichtleiter, also dem Hilfs-Lichtleiter, handelt es sich um eine Kompensationsfaser für mehrere Störgrößen. Dabei liegt das folgende Grundprinzip vor: Das Glasfaserkabel weist eine biegungsabhängige bzw. lageabhängige Dämpfung auf die zu einer Änderung der optischen Empfangsleistung führt. Daher liegt eine störende Kabelempfindlichkeit des Sensors vor. Die Kompensation erfolgt dabei wie folgt: Die zweite Faser bzw. der Hilfs-Lichtleiter wird in einer gemeinsamen Hülle mit der eigentlichen Meßfaser im Zuleitungskabel geführt. Damit erfahren beide Fasern praktisch dieselbe Dämpfung. Nun wird mit einer geeigneten Regelelektronik das Empfangssignal aus der Hilfsfaser konstant gehalten, indem die Lichtleistung der Lichtquelle nachgeregelt wird. Wird nun die Lichtleistung der LED der Meßfaser in gleicher Weise nachgeregelt, oder es werden beide Lichtleiter von derselben Lichtquelle gespeist, die auch in der eben beschriebenen Weise geregelt wird, so ist die Kabelempfindlichkeit kompensiert. Die Hilfsfaser ist tatsächlich in der Lage, drei Störgrößen zu kompensieren, nämlich Kabeldämpfung, Biegeempfindlichkeit und Temperatur, Änderungen des Sensorkopfes und Änderungen der Reflektionseigenschaften der Membran bzw. der Spiegelfläche.

Für die Hinleitung des Lichtes von der Lichtquelle und die Rückleitung des reflektierten Lichtes zum Lichtempfänger kann über den größten Teil seiner Länge der gleiche Lichtleiter ausgenutzt werden. Dann ist lediglich hinter der Lichtquelle bzw. vor dem Lichtempfänger ein nicht näher dargestellter weiterer Lichtteiler anzubringen, der das zurückkehrende Licht von dem ausgesandten Licht trennt.

Die Temperaturabhängigkeit und damit etwa erforderliche weitere Korrekturen können auch durch die Formgebung der Membran vermindert werden. Diese kann konvex gegenüber der Licht-Austrittsstelle des Lichtleiters gewölbt sein; sie kann aber auch mit ringförmigen Zonen unterschiedlicher Dicke ausgestaltet sein, vorzugsweise derart, daß die Membran an ihrem Rand und in ihrer Mitte dünner, in den dazwischenliegenden Bereichen jedoch dicker ist.

Für die Reflexion des über den Lichtleiter zugeführten Lichtes kann die Oberfläche der Membran selbst spiegelnd ausgebildet sein; es kann aber auch ein spiegelndes Element auf den betreffenden Teil der Membrane angebracht sein. Dadurch ist eine Anpassung an die Lichtwellenlänge oder eine verbesserte Langzeit-Stabilisierung möglich, ohne daß eine unzulässige Beeinflussung des Materials der Membran zu befürchten ist. Insbesondere kann die Spiegelfläche chemisch passiviert werden; sie kann auch, z.B. durch Aufdampfen, mit einem nicht oxidierenden bzw. bei hohen Temperaturen nicht anlaufenden Material beschichtet sein.

Nach einer Weiterbildung der Erfindung ist es auch möglich, den Raum zwischen Lichtleiter und Membran mit Edelgas, ggfs. mit vermindertem Druck, zu füllen, wobei dann selbstverständlich für eine Abdichtung nach außen Sorge zu tragen ist. Gegebenenfalls kann dieser Raum sogar evakuiert werden; das kann sich insbesondere dann empfehlen, wenn im Hinblick auf das Messen höherer Drucke die Membran ohnehin sehr stabil ausgeführt ist.

Weitere Einzelheiten, Merkmale und Vorteile werden anhand von Ausführungsbeispielen in der Zeichnung näher erläutert. Es zeigt

Fig. 1 in einer Ansicht und teils im Schnitt einen faseroptischen Druckaufnehmer,

Fig. 2 eine weitere Ausführungsform, bei der Für die Hinleitung und die Rückleitung des Lichtes der gleiche Lichtleiter benutzt wird,

Fig. 3 eine zum Lichtleiter hin konkav gewölbte Membran und

Fig. 4 eine Membran mit Zonen unterschiedlicher Dicke zur Verbesserung der Kennlinie.

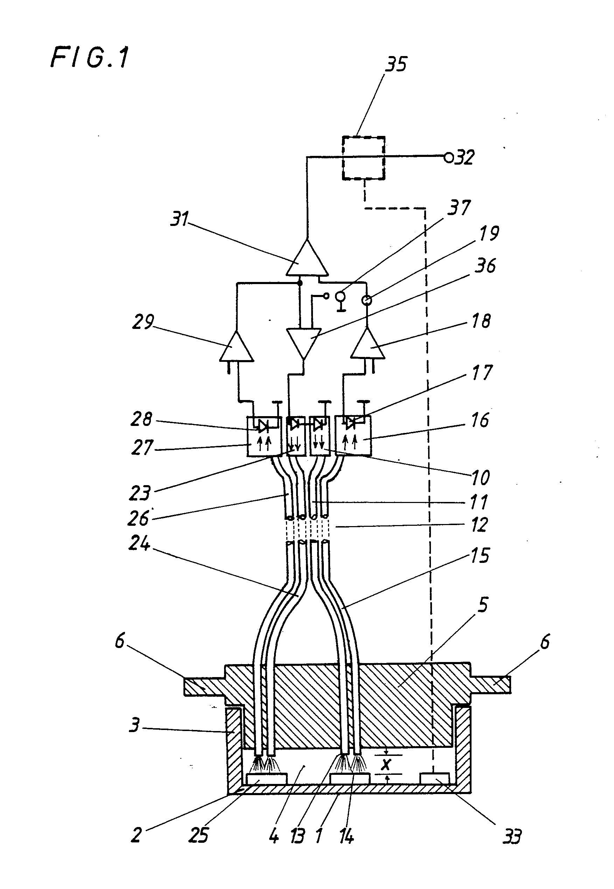

In Fig. 1 ist ein Druckaufnehmer dargestellt, bei dem eine Membran 1 einem Medium ausgesetzt ist, dessen Druck gemessen werden soll.

Die Membran I, die vorzugsweise kreisrund ausgebildet ist, ist an ihrem Rand 2 in einem Haltering 3 gehaltert. Durch die Membran 1 und den Haltering 3 wird eine Kammer 4 gebildet, die mit einem Verschlußstück 5, sozusagen mit einem Deckel, verschossen ist. Das Verschlußstück 5 kann in beliebiger Weise an einer Armatur gehalten sein, z.B. mittels eines flanschartigen Ringes 6. Der Haltering 3 ist an dem Verschlußstück 5 befestigt, z.B. mittels eines Gewindes od.dgl.

Von einer Lichtquelle 10, z. B. einer Leuchtdiode, wird Lichtenergie einem Lichtleiter 11 zugeführt, der eine weitgehend beliebige Länge haben kann.

Das von einer Lichtquelle 10 eingestrahlte Licht wird in dem Lichtleiter 11 (Faser) von z.B. 100 bis 300 Mikrometer Faserdurchmesser weitergeführt und tritt am anderen Ende 13 aus. Über einen kurzen Abstand von z.B. 100 $\mu$m trifft das Licht dann auf eine spiegelnde Oberfläche und wird dort reflektiert. Das reflektierte Licht wird zu einem Teil von einem zweiten Lichtleiter 15 (Faser) aufgenommen und an seinem anderen Ende einem weiteren Lichtempfänger 16, z.B. mit einer Fotodiode 17, aufgenommen. Dort wird die zugeführte Lichtintensität umgewandelt in eine elektrische Steuergröße, die dem Eingang eines Verstärkers 18 zugeführt wird. An einer mit dem Ausgang des Verstärkers 18 verbundenen Ausgangsklemme 19 trifft dann eine elektrische Steuergröße, z.B. eine Spannung oder ein Strom auf, deren Größe in Abhängigkeit vom Abstand x zwischen der Austrittsfläche des Lichtleiters 15 und der spiegelnden Oberfläche 14 beeinflußt wird.

Nach einem bevorzugten Ausführungsbeispiel wird in Fig. 1 von einer Lichtquelle 23 über einen Hilfs-Lichtleiter 24 (Faser) Licht einer in der Nähe des Randes 2 der Membran 1 angeordneten zweiten spiegelnden Fläche 25 zugeführt. Von der Fläche 25 reflektiertes Licht wird in einen anderen Hilfs-Lichtleiter 26 eingekoppelt und über diesen einem zweiten Lichtempfänger 27 zugeführt. In diesem wird mittels einer Fötodiode 28 ein elektrisches Signal gebildet, das der Intensität des Signals an der Aus trittsstelle aus dem Lichtleiter 24 entspricht. Da sich der Spiegel 25 an dem Randteil oer Membran 1 praktisch nicht bewegt, ist dieses Intensitätssignal vom Lichtempfänger 27 vom Meßdruck wenigstens nahezu unabhängig. Wenn sich aber z.B. der Haltering 3 durch Temperatureinwirkungen ausdehnt, wird auch die Membran 1 von der unteren Fläche des Verschlußteiles 5 entfernt. Diese temperaturabhängige Veränderung wirkt sich voll auf die Intensität des im Lichtleiter 24 zurücklaufenden Lichtes aus. Das Ausgangssignal des Verstärkers 29 ist somit praktisch ausschließlich von der Temperatur im Meßkopf 1,2,3,5 abhängig und kann somit einer Auswerteeinrichtung zur Korrektur zugeführt werden.

Diese Auswerteeinrichtung besteht nach der im oberen Teil der Fig. 1 wiedergegebenen Schaltung aus einem Differenzverstärker 31, dessen anderem Eingang das durch Reflexion an der spiegelnden Fläche 14 in der Mitte der Membran erhaltene Signal von der Klemme 19 zugeführt wird.

Bei einem faseroptischen Druckaufnehmer der in Rede stehenden Art beträgt die Intensität $I_E$ des dem Strahlungsempfänger 16,17 zugeführten Lichtes

$$I_E = (I_Q \bullet D - m \bullet x) S \bullet D$$

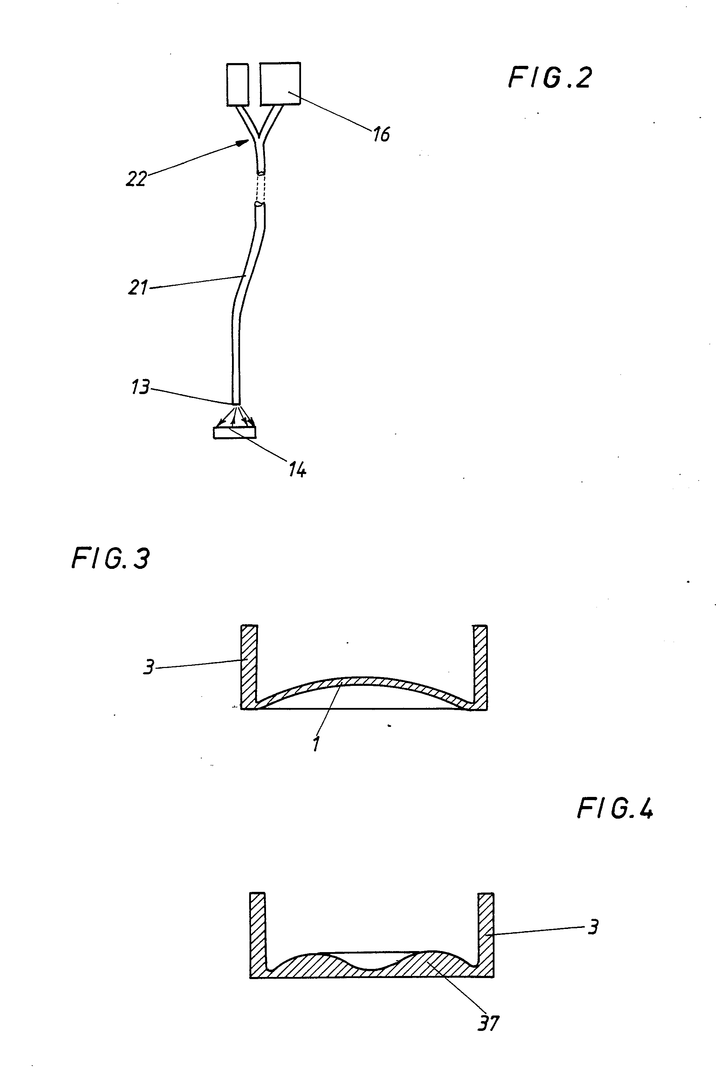

Dabei ist $I_Q$ die Intensität des von der Lichtquelle 10 dem Lichtleiter 11 zugestrahlten Lichtes; D ist der Dämpfungsfaktor im Lichtleiter, S bedeutet den Reflexionsfaktor bei Spiegelung am Spiegel 14, x ist der in Fig. 2 angedeutete Abstand zwischen den Enden der Lichtleiter 11,15 und der spiegelnden Fläche 14. m bedeutet die Steilheit der Einwirkung der Verschiebung auf die Intensität des zurückgeleiteten Lichtes.

Mit a = M/$I_Q$ $\bullet$ D wird erhalten

$$I_E = I_Q \bullet S \bullet D^2 ( 1 - a \bullet x),$$
wobei

$$a = \frac{m}{I_Q \bullet D}$$

ist.

Wenn die Verschiebung x in einen von der Temperatur T abhängigen Teil und einen vöm Druck P abhängigen Teil aufgeteilt wird, so werden in den Empfängern 16 bzw. 27 Lichtintensitäten $I_{EM}$ bzw. $I_{ER}$ erhalten.

$$I_{EM} = I_Q \bullet S \bullet D^2 (1 - ax_{TM} - ax_{PM})$$

$$I_{ER} = I_Q \bullet S \bullet D^2 (1 - ax_{TR} - ax_{PR})$$

Die von temperaturbedingten Verformungen abhängigen Verschiebungen $x_{TM}$ und $x_{TR}$ sind gleich. Wenn die Differenz zwischen den beiden Intensitäten bzw. ihnen entsprechenden elektrischen Signalen gebildet wird, dann wird

$$\Delta I = I_{EM} - I_{ER}$$

$$= I_Q \bullet S \bullet D^2 a( x_{PR} - x_{PM}) \, , \, x_{TM} = x_{TR}$$

erhalten.

Das Ergebnis ist somit von der Temperatur unabhängig und ergibt einen Meßwert für den Druck.

Demgemäß wird in Fig. 1 zwischen den Ausgangssignalen der Verstärker 18 und 29 in einem als Auswerteeinheit wirksamen Differenzverstärker 31 das Differenzsignal gebildet und kann dem Ausgang 32 entnommen werden.

Es besteht auch die Möglichkeit, einen separaten Temperaturfühler 33 an dem Rande der Mambran 1, ggfs. auch am Haltering 3, anzuordnen, der ein, z.B. elektrisches, Signal an eine Leitung 34 abgibt. Das Ausgangssignal von der Klemme 19 kann zur Ausgangsklemme 32 über eine Ausgleicheinrichtung 35 geführt werden, in der mit dem von der Leitung 34 her zugeführten Temperatursignal die erforderliche Temperaturkorrektur vorgenommen wird.

Das vom Verstärker 29 her zugeführte Meßsignal kann auch einem Differenzverstärker 36 zugeführt werden, dessen anderem Eingang ein Vergleichssignal 37 zugeführt wird. Mit dem Differenzverstärker 36 kann dann erreicht werden, daß die Amplitude des Ausgangssignals des Verstärkers 29 auf einen durch das Vergleichssignal 37 gegebenen konstanten Wert geregelt wird. Falls im Betrieb die Lichtleitungen in ihrer Lage stark verändert werden, derart, daß die Dämpfung D sich ändert, kann durch diese Nachregelung die Stärke der Lichtquellen 10 und 23 nachgeführt werden, derart, daß die Amplitude am Verstärker 29 praktisch konstant bleibt. Die mit dem optischen Meßsystem 11, 14, 15 erzielte Umsetzung eines Druckes in einen dazu proportionalen elektrischen Wert, insbesondere eine Ausgangs-Spannung, ist in der Regel keine streng lineare Funktion. Nach einer weiteren Ausführungsform kann dazu eine Linearisierung durchgeführt werden. Der Ausgangswert vom Verstärker 31 wird in der Ausgleichseinrichtung zunächst in einen Digitalwert umgewandelt (A/D - Wandler). Dieser Digitalwert kann gleichzeitig als Adresse für einen Tabellen-Speicher dienen, in dem für jeden Meßwert der richtige, d.h. korrigierte, Druckwert enthalten ist und der über einen D/A-Wandler dem Ausgang 32 zugeführt werden kann. Dort steht dann der linearisierte Druckwert in analoger Form zur Verfügung.

Fig. 3 zeigt eine Ausführungsform, bei der die Membran 1 entsprechend einer Kugelkalotte gebogen ist. Dadurch kann ebenfalls eine Verbesserung der Kennlinie erreicht werden.

Fig. 4 zeigt eine Ausführungsform, bei der eine Membran 37 unterschiedlicher Dicke verwendet wird. Dabei läßt sich ebenfalls eine Verbesserung der Kennlinie und/oder ggfs. des Temperaturverhaltens erreichen. Die Membran 37 soll dabei zweckmäßig zusammen mit dem Halter 3 als zylindrisches Drehteil hergestellt werden, damit sich im Bereich mechanischer Belastung bzw. Schwingungen keine Schweißoder Fügestellen befinden.

Als Membranwerkstoff kann eine hochwärmefeste Metallegierung dienen, die sich durch geringe Alterungserscheinungen und eine sehr hohe Dehnungsgrenze auszeichnet, so daß ein grosser Meßbereich erhalten werden kann und eine hohe Rückstellgenauigkeit der Membrän über die gesamte Lebensdauer hinweg erzielt wird.

Mit einem Druckaufnehmer gemäß Fig. kann auch eine hohe Nullpunktstabilität erzielt werden, insbesondere dadurch, daß die durch Reflexion im Randbereich 25 im Lichtempfänger 27 erhaltene Lichtintensität durch den Differenzverstärker 36 mit einem Soll-Wert $U_s$ einer Quelle 37 verglichen und durch Nachsteuerung der Lichtquellen 10 und 23 konstant gehalten wird, wobei durch die Nachsteuerung erreicht wird, daß Änderungen der Kabeldämpfung, Temperaturfehler und Reflexionsänderungen kompensiert werden. Zu diesem Zweck müssen beide Fasern möglichst gleichbehandelt sein, d.h. in einem gemeinsamen Führungsschlauch liegen. Dadurch werden sowohl temperaturbedingte Abweichungen als auch Abweichungen des Dämpfungsfaktors in den Lichtleitern und des Reflexionsfaktors am Spiegel 25 ausgeregelt. Wenn die Spiegel 25 und 14 von gleicher Art sind, heißt das auch, daß Änderungen des Reflexionsfaktors des Spiegels 14 vom Meßergebnis ferngehalten werden.

Eine Korrektur der Kennlinie ist auch dadurch möglich, daß die Spiegelfläche selbst konvex oder konkav gekrümmt wird. Dadurch kann der Rückstrahlung ein gegenüber einem ebenen Spiegel anderer Zusammenhang gegeben und die Kennlinie der im Lichtempfänger festgestellten Intensität im Verhältnis zur Membranverschiebung verändert werden. Aus dem Lichtleiter 11 bzw. 24 von der Lichtquelle 10 bzw. 23 zum Spiegel 14 bzw. 25 hin unter einem gewissen Öffnungswinkel von z.B. 70° ausgestrahlt. Dieses Licht kann durch einen gekrümmten Spiegel dann entweder mehr fokussiert oder mehr zerstreut werden, wodurch sich eine entsprechende Beeinflussung der Kennlinie ergibt. Als Lichtquelle in dem Lichtsender 10 bzw. 23 können Licht-Emissions-Dioden (LED'S) verwendet werden, aber auch Laser-dioden, die ggfs. eine größere Lichtintensität für Übertragung über lange Lichtleiterstrecken und/oder eine bessere Regelmöglichkeit bieten. Als Laser-Diode ist dabei ein Multimode-Laser mit kurzer Kohärenzlänge besondert geeignet, da sonst dem optischen Ausgangssignal störende Lichtinterferenzen überlagert sein können.

Die Glasfaser für den Druckaufnehmer soll eine möglichst große Numerische Apertur (NA) aufweisen, damit die durch Kabelbiegungen hervorgerufene Dämpfung möglichst kleine Werte annimmt. Eine große numerische Apertur verlangt eine große Brechungsindex-Differenz zwischen Kern-und Mantelmaterial der Glasfaser. Diese Differenz ist dazu geeignet, auch Lichtausbreitungs-Moden mit einem stumpfen Einfallswinkel auf die Grenzschicht verlustfrei zu reflektieren, so daß relativ kleine Biegeradien mit geringer Dämpfung möglich werden.

Bekannte Lichtleiter für nachrichtentechnische Zwecke haben demgegenüber eine relativ kleine numerische Apertur, die sie für die Verwendung in einem Druckaufnehmer nach der Erfindung wenig geeignet machen.

Lichtleiter für Aufnehmer nach der Erfindung sollen eine hochtemperaturfeste Beschichtung (primäre Faserschutzbeschichtung) besitzen. Diese kann beispielsweise in Form einer aufgedampften Schicht aus Metall od.dgl., z.B. aus Aluminium oder Titancarbid ausgeführt sein. Handelsübliche Glasfasern sind normalerweise nur bis zu einer Temperatur von maximal 125°C einsetzbar, da die Faserschutzbeschichtung oberhalb dieser Temperatur zerstört wird.

Für die Hinleitung des Lichtes von der Lichtquelle und die Rückleitung des reflektierten Lichtes zum Lichtempfänger kann über des größten Teil seiner Länge der gleiche Lichtleiter 21 ausgenutzt werden. Dann ist lediglich hinter der Lichtquelle 10 bzw. vor dem Lichtempfänger 16 ein nicht näher dargestellter weiterer Lichtteiler 22 anzubringen, der das zurückkehrende Licht von dem ausgesandten Licht trennt.

## Ansprüche

1. Faseroptischer Druckaufnehmer, bei dem das Licht von einer (ersten) Lichtquelle über einen (ersten) Lichtleiter zu einem Aufnehmerkopf geführt wird, in dem das Licht an einer ersten Licht-Austrittsstelle aus dem Lichtleiter austritt und von einem etwa in der Mitte einer Membran angebrachten (ersten) spiegelnden Fläche reflektiert wird, wobei ein Teil des reflektierten Lichtes in einen, gegebenenfalls den gleichen, Lichtleiter wieder eingekoppelt und seine Intensität an der Austrittsstelle aus diesem Lichtleiter in einem Lichtempfänger bestimmt wird und aus dem so erhaltenen elektrischen Intensitätssignal in einer Auswerteeinrichtung eine etwaige Verschiebung der spiegelnden Fläche gegenüber der ersten Licht-Austrittsstelle und/oder der Licht-Einkoppelstelle der Druckmeßwert bestimmt wird, dadurch gekennzeichnet, daß an der oder wenigstens in der Nähe der Membran (1) wenigstens ein Korrektursignal-Element (33,25) angeordnet ist, von dem ein Korrektursignal der Auswerteeinrichtung (31 bzw. 35) zugeführt wird.

2. Druckaufnehmer nach Anspruch 1, dadurch gekennzeichnet, daß als Korrektursignal-Element ein Temperaturfühler (33) angeordnet ist.

3. Druckaufnehmer nach Anspruch 2, dadurch gekennzeichnet, daß ein elektrischer Temperaturfühler (33) angeordnet ist.

4. Druckaufnehmer nach einem der vorangehenden Ansprüche, dadurch gekennzeichnet, daß Licht (23), das gegebenenfalls der gleichen Lichtquelle entnommen ist, über wenigstens einen Hilfs-Lichtleiter (26) einer zweiten, in der Nähe des Randes (2) der Membran (1) angeordneten zweiten spiegelnden Fläche (25) zugeführt und das von ihr reflektierte Licht in einen, gegebenenfalls den gleichen, Hilfs-Lichtleiter (24) eingekoppelt und seine Intensität an der Austrittsstelle (in 27) aus diesem Lichtleiter (24) bestimmt wird und aus dem erhaltenen Intensitätssignal (in 2g) ein etwaiges, vom Meßdruck wenigstens nahezu unabhängiges Korrektursignal gewonnen und der Auswerteeinrichtung (31) zugeführt wird.

5. Druckaufnehmer nach Anspruch 4, dadurch gekennzeichnet, daß das der Membran (1) zugewandte Ende des Hilfs-Lichtleiters (24) verspiegelt ist.

6. Druckaufnehmer nach Anspruch 4, dadurch gekennzeichnet, daß das Licht aus dem Hilfs-Lichtleiter (24) austritt und von einer auf der Membran am Rande angebrachten spiegelnden Fläche (25) reflektiert wird.

7. Druckaufnehmer nach einem der vorangehenden Ansprüche, dadurch gekennzeichnet, daß das Korrektursignal (von 29) dem Intensitätssignal (von 18) additiv zugesetzt wird.

8. Druckaufnehmer nach einem der vorangehenden Ansprüche, dadurch gekennzeichnet, daß der Auswerteeinrichtung (31) eine Ausgleichseinrichtung (35), z.B. mit einem Tabellen-Speicher zugeordnet ist, mit dessen Hilfe die durch die Kennlinie des Druckaufnehmers (1,2,3,5,14) bedingten Abweichungen von einem gewünschten, zB. linearen, Verlauf beeinflußt werden, und daß das Korrektursignal (34 bzw. von 31) der Ausgleichseinrichtung (35) zugeführt wird.

9. Druckaufnehmer nach einem der vorangehenden Ansprüche, dadurch gekennzeichnet daß die Lichtleiter (11,15,24, 26) wenigstens zu einem großen Teil ihrer Länge, eng benachbart geführt sind, z.B. in einer schlauchartigen Hülle.

10. Druckaufnehmer nach einem der vorangehenden Ansprüche, dadurch gekennzeichnet, daß für das Licht von der Lichtquelle (10) und für das reflektierte Licht der gleiche Lichtleiter (22) ausgenutzt werden (Fig. 2).

11. Druckaufnehmer nach einem der vorangehenden Ansprüche, dadurch gekennzeichnet, daß durch Formgebung der Membran (1) die Temperaturabhängigkeit des Intensitätssignals vermindert ist.

12. Druckaufnehmer nach Anspruch 11, dadurch gekennzeichnet, daß die Membran (1) konvex gegenüber der Licht-Austrittsstelle (13) gewölbt ist (Fig. 3).

13. Druckaufnehmer nach Anspruch 11, dadurch gekennzeichnet, daß die Membran (1) ringförmige Zonen unterschiedlicher Dicke aufweist (Fig. 4).

14. Druckaufnehmer nach Anspruch 13, dadurch gekennzeichnet, daß die Membran (37) an ihrem Rand und in ihrer Mitte dünner, in den dazwischenliegenden Bereichen jedoch dicker ist.

15. Druckaufnehmer nach einem der vorangehenden Ansprüche , dadurch gekennzeichnet, daß die Oberfläche der Membran (1) spiegelnd ausgebildet ist.

16. Druckaufnehmer nach einem der Ansprüche 1 bis 14, dadurch gekennzeichnet, daß auf der Oberfläche der Membran (1) ein spiegelndes Element (25) angebracht ist.

17. Druckaufnehmer nach Anspruch 16, dadurch gekennzeichnet, daß die Spiegeloberfläche (25), insbesondere konkav oder konvex, gekrümmt ist.

18. Druckaufnehmer nach einem der vorangehenden Ansprüche, dadurch gekennzeichnet, daß die spiegelnde Oberfläche (14,25) chemisch passiviert ist.

19. Druckaufnehmer nach einem der vorangehenden Ansprüche, dadurch gekennzeichnet, daß die spiegelnde Oberfläche (14,25), z.B. durch Aufdampfen, mit einem nicht anlaufenden Material temperaturfest beschichtet ist.

20. Druckaufnehmer nach einem der vorangehenden Ansprüche, dadurch gekennzeichnet, daß der Raum (4) zwischen Lichtleiter (11,15,24,23) und Membran (1) mit Edelgas gefüllt ist.

21. Druckaufnehmer nach einem der Ansprüche 1 bis 19, dadurch gekennzeichnet, daß der Raum (4) zwischen Lichtleiter (11,15,24,26) und Membran (1) evakuiert ist.

22. Druckaufnehmer nach einem der Ansprüche 1 bis 21, dadurch gekennzeichnet, daß der zweite Lichtleiter (15) als Kompensationsfaser für mehrere Störgrößen ausgebildet ist, wobei die zweite Faser (Hilfsfaser) in einer gemeinsamen Hülle mit der eigentlichen Meßfaser in dem Zuleitungskabel geführt ist, so daß die beiden Fasern dieselbe Dämpfung erfahren, daß mit einer Regelelektronik das Empfangssignal aus der Hilfsfaser konstant gehalten wird, indem die Lichtleistung der LED oer Meßfaser in gleicher Weise nachgeregelt oder beide Lichtleiter von derselben Lichtquelle gespeist werden, die in gleicher Weise regelbar sind.

23. Druckaufnehmer nach einem der vorangegangenen Ansprüche 1 bis 22, dadurch gekennzeichnet, daß durch die Nachsteuerung erreicht wird, daß Änderungen der Kabeldämpfung, Temperaturfehler und Reflexionsänderungen kompensierbar sind, wobei die beiden Fasern in einem gemeinsamen Führungsschlauch angeordnet sind.

FIG.1

FIG.2

FIG.3

FIG.4

Europäisches Patentamt

EUROPÄISCHER RECHERCHENBERICHT

Nummer der Anmeldung

EP 87 10 6895

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | DE-A-3 428 980  (SIEMENS AG)<br>* Zusammenfassung; Ansprüche 1, 2 *<br>--- | 1 | G 01 L  11/00 |
| A | DE-A-2 450 080  (LICENTIA PATENT-VERWALTUNGS GMBH)<br>* Figur 2; Anspruch 1 *<br>--- | 1 | |
| A | US-A-3 580 082  (STRACK)<br>* Figuren 4, 6; Ansprüche 1-4 *<br>--- | 1 | |
| A | DE-A-3 211 828  (PHILIPS PATENTVERWALTUNG GMBH)<br>----- | 7,8 | |

| RECHERCHIERTE SACHGEBIETE (Int. Cl.4) |
|---|
| G 01 L  11/00 |

Der vorliegende Recherchenbericht wurde für alle Patentansprüche erstellt

| Recherchenort | Abschlußdatum der Recherche | Prüfer |
|---|---|---|
| BERLIN | 21-01-1988 | KOEHN G |